# EUROPÄISCHE PATENTSCHRIFT

(11) **EP 0 795 568 B1**
(45) Veröffentlichungstag und Bekanntmachung des Hinweises auf die Patenterteilung: **11.09.2002**
(21) Anmeldenummer: 97103722.1
(22) Anmeldetag: 06.03.1997
(51) Int. Cl.: C08F 291/00, C08F 2/22, C09D 151/00

(54) **Wässrige Polymerdispersionen als Bindemittel für elastische block- und kratzfeste Beschichtungen**
Aqueous dispersions as liant for elastic blocking resistant and scratch resistant coatings
Dispersions aqueuses comme liants pour des revêtements élastiques sans adhésion de contact et résistant à l'abrasion

(30) Priorität: 11.03.1996 DE 19609509
(43) Veröffentlichungstag der Anmeldung: 17.09.1997
(73) Patentinhaber: Clariant GmbH, 65929 Frankfurt am Main (DE)
(72) Erfinder: Désor, Ulrich, 65510 Idstein (DE); Krieger, Stephan, Dr., 65719 Hofheim (DE)

(56) Entgegenhaltungen:
- WO-A-96/16998
- DE-A- 2 044 867
- DE-A- 3 443 964
- GB-A- 2 298 208

## Beschreibung

Gegenstand der vorliegenden Erfindung sind Polymerdispersionen, die im Bereich von 0 bis 40 °C ausreichend elastische Filme mit hoher Blockfestigkeit und Kratzfestigkeit bilden, Verfahren zu deren Herstellung sowie deren Verwendung als Bindemittel für die Beschichtung von Untergründen.

Zur Herstellung von wäßrigen Beschichtungen, die auf nicht maßhaltigen Untergründen appliziert werden, beispielsweise Holzlacken, Lasuren und Glanzfarben, benötigt man Bindemittel, die eine ausreichende Elastizität besitzen, so daß es bei der Bewitterung der Beschichtung zu keiner Rißbildung kommt. Des weiteren wird von diesen Beschichtungen aber auch eine gewisse Härte gefordert, damit die Beschichtung eine .gute Kratzfestigkeit und Blockfestigkeit besitzt. Aus ökologischen Gründen wird eine Verfilmung des Bindemittels im Bereich von 0 bis 40 °C angestrebt, so daß keine oder nur geringe Mengen eines Filmkonsolidierungsmittels benötigt werden.

Aus EP-B 0 184 091 und EP-B 0 015 644 ist bekannt, daß man durch mehrstufige Emulsionspolymerisation wäßrige selbstvernetzende Polymerdispersionen herstellen kann, die eine niedrige Mindestfilmbildetemperatur (MFT) aufweisen und Filme mit hoher Blockfestigkeit bilden. Infolge der Verwendung eines relativ hohen Anteils an weichen Monomeren in der ersten Stufe weisen die entsprechenden Polymerfilme aber Mängel bezüglich ihrer Kratzfestigkeit auf. Dies könnte durch Einsatz größerer Mengen an selbstvernetzenden Gruppen kompensiert werden, doch müßte dann eine Verschlechterung der Reißdehnung und ein höherer Preis in Kauf genommen werden.

Mehrstufenpolymerisate, wie in EP-B 0 332 011 beschrieben, die eine MFT im Bereich von 65 bis 110 °C besitzen, bilden sehr kratzfeste Filme, benötigen aber bei Verwendung als Bindemittel eine große Menge an Filmkonsolidierungsmittel.

Des weiteren ist die Reißdehnung der entsprechenden Lackfilme für eine Anwendung auf nicht maßhaltigen Untergründen nicht ausreichend.

Aufgabe der vorliegenden Erfindung war es, eine Polymerdispersion mit einer MFT im Bereich von 0 bis 40 °C bereit zustellen, die einen Polymerfilm bildet, der sowohl eine hohe Blockfestigkeit und Kratzfestigkeit besitzt als auch eine ausreichende Elastizität zur Beschichtung von nicht maßhaltigen Untergründen aufweist und die insbesondere zur Herstellung von Holzlacken, Lasuren und Glanzfarben geeignet ist.

Die Aufgabe wurde gelöst durch Herstellung einer Polymerdispersion mittels stufenweiser Emulsionspolymerisation von Monomermischungen, die einen Anteil an harten Monomeren von mindestens 30 Gew.-% in der ersten Polymerisationsstufe und mindestens 65 Gew.-% in der zweiten Polymerisationsstufe enthalten.

Gegenstand der Erfindung ist eine Polymerdispersion mit einer Mindestfilmbildetemperatur (MFT) im Bereich von 0 bis 40 °C, erhältlich durch stufenweise Emulsionspolymerisation, indem auf eine erste Stufe mit der Mononomerzusammensetzung I aus

| | |
|---|---|
| 50 bis 68,5 Gew.-% | weichen Monomeren A, deren Homopolymerisate eine Glasübergangstemperatur (T_{g}) unter 0 °C besitzen, |
| 30 bis 50 Gew.-% | harten Monomeren B, deren Homopolymerisate eine Glasübergangstemperatur (T_{g}) über 65 °C besitzen, |
| 0,5 bis 5 Gew.-% | mit A und B copolymerisierbaren α,β-ungesättigten Carbonsäuren und/oder Carbonsäureamiden C, |
| 1 bis 7,5 Gew.-% | Ketogruppen enthaltenden ethylenisch ungesättigten Monomeren D, |
| 0 bis 10 Gew.-% | sonstigen ethylenisch ungesättigten Monomeren E, die kein Stickstoffatom enthalten, |

jeweils bezogen auf die Gesamtmenge des Polymerisats der ersten Stufe, eine zweite Stufe mit der Monomerzusammensetzung II aus

| | |
|---|---|
| 5 bis 45 Gew.-% | weichen Monomeren A, deren Homopolymerisate eine Glasübergangstemperatur (T_{g}) unter 0 °C besitzen, |
| 65 bis 95 Gew.-% | harten Monomeren B, deren Homopolymerisate eine Glasübergangstemperatur (T_{g}) über 65 °C besitzen, |
| 0 bis 4 Gew.-% | mit A und B copolymerisierbaren α,β-ungesättigten Carbonsäuren und/oder Carbonsäureamiden C, |
| 0 bis 5 Gew.-% | Ketogruppen enthaltenden ethylenisch ungesättigten Monomeren D, |
| 0 bis 10 Gew.-% | sonstigen ethylenisch ungesättigten Monomeren E, die kein Stickstoffatom enthalten, |

jeweils bezogen auf die Gesamtmenge des Polymerisats der zweiten Stufe, in einem Gewichtsverhältnis der Monomerzusammensetzung I zur Monomerzusammensetzung II von 50:50 bis 75:25, vorzugsweise 50:50 bis 65:35, polymerisiert wird.

Unter weichen Monomeren A versteht man Monomere, deren entsprechende Homopolymerisate eine Glasübergangstemperatur T_{g} unter 0 °C, vorzugsweise unter -10 °C besitzen, wie (C₁-C₁₂)-Alkylester der Acrylsäure oder (C₅-C₁₂)-Alkylester der Methacrylsäure, beispielsweise Butylacrylat, n-Octylacrylat und 2-Ethylhexylacrylat.

Harte Monomere B sind Monomere, deren entsprechende Homopolymerisate eine Glasübergangstemperatur T_{g} über 65 °C, vorzugsweise über 85 °C besitzen, beispielsweise Styrol, Vinyltoluol, Acrylnitril, Methacrylnitril sowie (C₁-C₄)-Alkylester oder Cycloalkylester der Methacrylsäure, beispielsweise Methylmethacrylat, Cyclohexylmethacrylat, Isobornylmethacrylat und tert.-Butylmethacrylat.

Vorzugsweise wird in der Monomerzusammensetzung I mindestens 50 Gew.-% Styrol, bezogen auf die Gesamtmenge an harten Monomere B, eingesetzt.

Mit A und B copolymerisierbare α,β-ungesättigte Carbonsäuren und Carbonsäureamide C sind vorzugsweise solche mit 3 bis 8 Kohlenstoffatomen, beispielsweise Acrylsäure, Methacrylsäure, Itaconsäure, Acrylamid und Methacrylamid.

Geeignete Ketogruppen enthaltende ethylenisch ungesättigte Monomere D sind vorzugsweise Acetoacetoxygruppen-haltige Monomere, beispielsweise Acetoacetoxyethylmethacrylat,Acetoacetoxybutylmethacrylat,Acrylamidomethylacetylaceton und Acetessigsäurevinylester, polymerisierbare Derivate des Diacetons, beispielsweise Diacetonacrylamid und Diacetonmethacrylamid, sowie Butanonmethacrylsäurester.

Vorzugsweise enthält die Monomerzusammensetzung I für die erste Stufe einen größeren Anteil an Monomeren C und D als die Monomerzusammensetzung II für die zweite Stufe.

Ethylenisch ungesättigte Monomere E, die gegebenenfalls mit einpolymerisiert werden können, sind vorzugsweise Hydroxyalkyl(meth)-acrylate, Glycidyl(meth)-acrylate, Alkoxyvinylsilane und (Meth)acryloyloxyalkylsilane.

Zur Erhöhung der Chemikalienbeständigkeit kann die Dispersion noch polyfunktionelle Carbonsäurehydrazide F enthalten, die also mindestens zwei Hydrazidgruppen im Molekül enthalten, beispielsweise Adipinsäuredihydrazid, Oxalsäuredihydrazid, Isophthalsäuredihydrazid und Polyacrylsäurepolyhydrazid. Vorzugsweise liegt ein Verhältnis an Hydrazidgruppen zu im Polymerisat über Monomere D eingebauten Ketogruppen von 0,5 : 1 bis 1 : 0,5 vor, insbesondere ein äquimolares Verhältnis.

Gegenstand der vorliegenden Erfindung ist auch ein Verfahren zur Herstellung der Polymerdispersion gemäß Anspruch 1 durch stufenweise Emulsionspolymerisation.

Die Polymerisation wird nach den gängigen Verfahren der Emulsionspolymerisation durchgeführt, indem die Monomerzusammensetzung I der ersten Stufe und die Monomerzusammensetzung II der zweiten Stufe nacheinander in wäßriger Phase in Gegenwart von Emulgatoren, Initiatoren und gegebenenfalls Schutzkolloiden bei Temperaturen von 60 bis 95 °C emulgiert und polymerisiert werden. Vorzugsweise wird nach dem Emulsions-Zulaufverfahren gearbeitet, bei dem eine kleine Menge der Monomerzusammensetzung I vorpolymerisiert wird und anschließend nacheinander die verbleibende Menge der Monomerzusammensetzung I und die Monomerzusammensetzung II vorzugsweise in Form einer wäßrigen Emulsion zudosiert werden. Alternativ kann auch nacheinander ein Monomerzulauf von I und II erfolgen, sowie eine nacheinanderfolgende Batchpolymerisation von I und II.

Die Herstellung von hochwertigen Dispersionen gemäß der vorliegenden Erfindung erfolgt vorzugsweise in Gegenwart von Emulgatoren und/oder Schutzkolloiden. Die Dispersionen können, bezogen auf den Gehalt an Polymerisat, die üblicherweise verwendeten Mengen von bis zu 3 Gew.-%, vorzugsweise bis zu 2 Gew.-%, an ionischen Emulgatoren beziehungsweise bis zu 6 Gew.-%, vorzugsweise bis zu 4 Gew.-%, an nichtionischen Emulgatoren enthalten.

Als nichtionische Emulgatoren eignen sich beispielsweise Alkylpolyglykolether wie Ethoxylierungsprodukte von Lauryl-, Oleyl-, Stearylalkohol oder von Kokosfettalkohol, Alkylphenolpolyglykolether wie Ethoxylierungsprodukte von Octyloder Nonylphenol, Diisopropylphenol, Triisopropylphenol oder von Di- oder Tritert.-butylphenol, oder Ethoxylierungsprodukte von Polypropylenoxid.

Als ionogene Emulgatoren kommen in erster Linie anionische Emulgatoren in Frage. Es kann sich dabei um die Alkali- oder Ammoniumsalze von Alkyl-, Aryloder Alkylaryl- sulfonaten, -sulfaten,- phospaten, -phosphonaten handeln, wobei sich auch Oligo- oder Polyethylenoxid- Einheiten zwischen dem Kohlenwasserstoffrest und der anionischen Gruppe befinden können. Typische Beispiele sind Natriumlaurylsulfat, Natriumundecylglykolethersulfat, Natriumoctylphenolglykolethersulfat, Natriumdodecylbenzolsulfonat, Natriumlauryldiglykolsulfat, Ammonium-tri-tert.-butylphenolpenta-oder oktaglykolsulfat.

Als Schutzkolloide verwendet man gegebenenfalls Naturstoffe wie Gummiarabicum, Stärke, Alginate oder modifizierte Naturstoffe beispielsweise Methyl-, Ethyl-, Hydroxyalkyl- oder Carboxymethylcellulose, oder vollsynthetische Substanzen, beispielsweise Polyvinylalkohol, Polyvinylpyrrolidon. Bevorzugt können modifizierte Cellulose-Derivate und synthetische Schutzkolloide verwendet werden.

Der Einsatz dieser Schutzkolloide ist jedoch bei Verwendung der beschriebenen Monomersysteme nur beschränkt möglich. Die verwendbaren Mengen sind häufig nur 0,001 bis 1 Gew.-%, und die Verträglichkeit sowie die Art der Zugabe muß von Fall zu Fall geprüft werden.

Zum Starten und Weiterführen der Polymerisation bedient man sich öl- und/oder vorzugsweise wasserlöslicher Radikalbildner oder Redoxsysteme. Es eignen sich beispielsweise Wasserstoffperoxid, Kalium- oder Ammoniumperoxidisulfat, Dibenzoylperoxid, Laurylperoxid, Tri-tert.-butylperoxid, Bisazodiisobutyronitril, allein oder zusammen mit reduzierenden Komponenten, beispielsweise Natriumbisulfit, ®Rongalit (BASF), Glucose, Ascorbinsäure.

Des weiteren können Regler, wie Mercaptane und andere übliche, dem Fachmann für die Emulsionspolymerisation bekannte Hilfsstoffe, verwendet werden.

Die Dispersionen werden üblicherweise mit wäßrigen Ammoniak-, Alkali- und Erdalkalihydroxydlösungen neutralisiert und auf einen pH-Wert von 6,5 bis 10, vorzugsweise von 7,0 bis 9,0 eingestellt.

Trotz Verwendung eines relativ hohen Anteils an harten Monomeren B in der ersten Stufe I zeigen die aus den erfindungsmäßigen Dispersionen hergestellten Lackfilme überraschenderweise eine hohe Reißdehnung und eine ausreichende Elastizität zur Beschichtung nicht maßhaltiger Untergründe.

Weiterer Gegenstand der vorliegenden Erfindung ist die Verwendung der Polymerdispersion gemäß Anspruch 1 als Bindemittel für die Beschichtung von Untergründen.

Auf Basis der erfindungsgemäßen Polymerdispersion lassen sich pigmentierte und unpigmentierte Lacke, Lasuren und Farben, insbesondere Glanzfarben zur Beschichtung von Holz und anderen Untergründen herstellen. Diese können unter Verwendung der üblichen Zusatzstoffe, wie Netzmitteln beispielsweise Aminomethylpropanol, Entschäumern, beispielsweise Silikone und Mineralöle, Verdickern auf Basis von Polyacrylaten oder Polyurethanen, Wachsen auf Basis von Paraffin oder Polyethylen, Filmbildehilfsmitteln, beispielsweise ®Texanol (Eastman) oder Butyldiglykol, Pigmenten, beispielsweise Titandioxid, Füllstoffen, Dispergiermitteln, Konservierungsmitteln, Mattierungsmitteln und anderen dem Fachmann bekannten Additiven, hergestellt werden.

Die in den Beispielen angegebenen Teile und Prozente beziehen sich auf das Gewicht, soweit nicht anders vermerkt.

### BEISPIELE

### Beispiel 1

In einem 2 l Reaktor werden
- 410,00 Teile: Wasser,
- 13,24 Teile: C₁₁-Alkylethersulfat Na-Salz mit ca. 7 Ethylenoxideinheiten, 34 %ig,
- 30,00 Teile: Monomeremulsion I
auf 80 °C erhitzt und mit 0,375 Teilen Ammoniumperoxidisulfat in 10 Teilen Wasser versetzt. Anschließend werden innerhalb von 3,5 Stunden die verbleibende Monomeremulsion I und anschließend die Monomeremulsion II zusammen mit 2,3 Teilen Ammoniumperoxidisulfat, gelöst in 40 Teilen Wasser, zudosiert. Es wird noch 60 min weiter geheizt und dann abgekühlt. Der pH-Wert wird mit einer 25 %igen Ammoniaklösung auf pH 9,0 gestellt Anschließend wird die Dispersion mit 81 Teilen einer 10%igen Adipinsäuredihydrazidlösung versetzt. Der Feststoff der Dispersion beträgt ca. 47 % und die MFT ca. 18 °C.

Zur Herstellung der Monomeremulsion I werden
- 192,13 Teile: Wasser,
- 14,56 Teile: C₁₁-Alkylethersulfat Na-Salz mit ca. 7 Ethylenoxideinheiten, 34 %ig,
- 144,38 Teile: Styrol
- 268,13 Teile: Butylacrylat,
- 12,38 Teile: Methacrylsäure,
- 12,38 Teile: Diacetonacrylamid
mit einem Schnellrührer so lange gerührt, bis eine stabile Emulsion entsteht.

Zur Herstellung der Monomeremulsion II werden
- 157,20 Teile: Wasser,
- 11,91 Teile: C₁₁-Alkylethersulfat Na-Salz mit ca 7 Ethylenoxideinheiten, 34 %ig,
- 33,75 Teile: Styrol,
- 67,50 Teile: Butylacrylat,
- 236,25 Teile: Methylmethacrylat,
- 3,38 Teile: Methacrylsäure,
- 3,38 Teile: Diacetonacrylamid
mit einem Schnellrührer so lange gerührt, bis eine stabile Emulsion entsteht.

### Beispiel 2

In einem 2 I Reaktor werden
- 410,00 Teile: Wasser,
- 13,24 Teile: C₁₁-Alkylethersulfat Na-Salz mit ca. 7 Ethylenoxideinheiten, 34 %ig,
- 30,00 Teile: Monomeremulsion I
auf 80 °C erhitzt und mit 0,375 Teilen Ammoniumperoxidisulfat in 10 Teilen Wasser versetzt. Anschließend werden innerhalb von 3,5 Stunden die verbleibende Monomeremulsion I und anschließend die Monomeremulsion II zusammen mit 2,3 Teilen Ammoniumperoxidisulfat, gelöst in 40 Teilen Wasser, zudosiert. Es wird noch 60 min weiter geheizt und dann abgekühlt. Der pH-Wert wird mit einer 25 %igen Ammoniaklösung auf pH 9,0 gestellt. Anschließend wird die Dispersion mit 131 Teilen einer 10 %igen Adipinsäuredihydrazidlösung versetzt. Der Feststoff der Dispersion beträgt ca. 47 % und die MFT ca. 19 °C.

Zur Herstellung der Monomeremulsion I werden
- 192,79 Teile: Wasser,
- 15,88 Teile: C₁₁-Alkylethersulfat Na-Salz mit ca. 7 Ethylenoxideinheiten, 34 %ig,
- 180,00 Teile: Styrol,
- 270,13 Teile: Butylacrylat,
- 13,50 Teile: Methacrylsäure,
- 22,50 Teile: Diacetonacrylamid
mit einem Schnellrührer so lange gerührt, bis eine stabile Emulsion entsteht.

Zur Herstellung der Monomeremulsion II werden
- 128,53 Teile: Wasser,
- 10,59 Teile: C₁₁-Alkylethersulfat Na-Salz mit ca. 7 Ethylenoxideinheiten, 34 %ig,
- 60,00 Teile: Butylacrylat,
- 240,00 Teile: Methylmethacrylat,
- 3,00 Teile: Methacrylsäure,
- 3,00 Teile: Diacetonacrylamid
mit einem Schnellrührer so lange gerührt, bis eine stabile Emulsion entsteht.

### Beispiel 3

In einem 2 I Reaktor werden
- 410,00 Teile: Wasser,
- 13,24 Teile: C₁₁-Alkylethersulfat Na-Salz mit ca. 7 Ethylenoxideinheiten, 34 %ig,
- 30,00 Teile: Monomeremulsion I
auf 80 °C erhitzt und mit 0,375 Teilen Ammoniumperoxidisulfat in 10 Teilen Wasser versetzt. Anschließend werden innerhalb von 3,5 Stunden die verbleibende Monomeremulsion I und anschließend die Monomeremulsion II zusammen mit 2,3 Teilen Ammoniumperoxidisulfat, gelöst in 40 Teilen Wasser, zudosiert. Es wird noch 60 min weiter geheizt und dann abgekühlt. Der pH-Wert wird mit einer 25 %igen Ammoniaklösung auf pH 9,0 gestellt. Anschließend wird die Dispersion mit 85 Teilen einer 10 %igen Adipinsäuredihydrazidlösung versetzt. Der Feststoff der Dispersion beträgt ca. 47 % und die MFT ca. 10 °C.

Zur Herstellung der Monomeremulsion I werden
- 208,68 Teile: Wasser,
- 15,88 Teile: C₁₁-Alkylethersulfat Na-Salz mit ca. 7 Ethylenoxideinheiten, 34 %ig,
- 180,00 Teile: Styrol,
- 270,00 Teile: Ethylhexylacrylat,
- 13,50 Teile: Methacrylsäure,
- 13,50 Teile: Diacetonacrylamid
mit einem Schnellrührer so lange gerührt, bis eine stabile Emulsion entsteht.

Zur Herstellung der Monomeremulsion II werden
- 139,12 Teile: Wasser,
- 10,59 Teile: C₁₁-Alkylethersulfat Na-Salz mit ca 7. Ethylenoxideinheiten, 34 %ig,
- 60,00 Teile: Butylacrylat,
- 240,00 Teile: Methylmethacrylat,
- 3,00 Teile: Methacrylsäure;
- 3,00 Teile: Diacetonacrylamid
mit einem Schnellrührer so lange gerührt, bis eine stabile Emulsion entsteht.

### Beispiel 4

In einem 2 I Reaktor werden
- 410,00 Teile: Wasser,
- 13,24 Teile: C₁₁-Alkylethersulfat Na-Salz mit ca. 7 Ethylenoxideinheiten, 34 %ig,
- 30,00 Teile: Monomeremulsion I
auf 80 °C erhitzt und mit 0,375 Teilen Ammoniumperoxidisulfat in 10 Teilen Wasser versetzt. Anschließend werden innerhalb von 3,5 Stunden die verbleibende Monomeremulsion I und anschließend die Monomeremulsion II zusammen mit 2,3 Teilen Ammoniumperoxidisulfat, gelöst in 40 Teilen Wasser, zudosiert. Es wird noch 60 min weiter geheizt und dann abgekühlt. Der pH-Wert wird mit einer 25 %igen Ammoniaklösung auf pH 9,0 gestellt. Der Feststoff der Dispersion beträgt ca. 47 % und die MFT < 0 °C.

Zur Herstellung der Monomeremulsion I werden
- 210,00 Teile: Wasser,
- 13,23 Teile: C₁₁-Alkylethersulfat Na-Salz mit ca. 7 Ethylenoxideinheiten, 34 %ig,
- 101,25 Teile: Styrol,
- 255,00 Teile: Ethylhexylacrylat,
- 18,75 Teile: Methylmethacrylat,
- 11,25 Teile: Methacrylsäure,
- 11,25 Teile: Acetylacetoxyethylmethacrylat
mit einem Schnellrührer so lange gerührt, bis eine stabile Emulsion entsteht.

Zur Herstellung der Monomeremulsion II werden
- 210,00 Teile: Wasser,
- 13,23 Teile: C₁₁-Alkylethersulfat Na-Salz mit ca. 7 Ethylenoxideinheiten, 34 %ig,
- 112,50 Teile: Ethylhexylacrylat,
- 262,50 Teile: Methylmethacrylat,
- 3,75 Teile: Methacrylsäure,
- 11,25 Teile: Acetylacetoxyethylmethacrylat
mit einem Schnellrührer so lange gerührt, bis eine stabile Emulsion entsteht.

### Vergleichsbeispiel

In einem 2 I Reaktor werden
- 410,00 Teile: Wasser,
- 13,24 Teile: C₁₁-Alkylethersulfat Na-Salz mit ca. 7 Ethylenoxideinheiten 34%ig,
- 30,00 Teile: Monomeremulsion I
auf 80 °C erhitzt und mit 0,375 Teilen Ammoniumperoxidisulfat in 10 Teilen Wasser versetzt. Anschließend werden innerhalb von 3.5 Stunden die verbleibende Monomeremulsion I und anschließend die Monomeremulsion II zusammen mit 2,3 Teilen Ammoniumperoxidisulfat, gelöst in 40 Teilen Wasser, zudosiert. Es wird noch 60 min weiter geheizt und dann abgekühlt. Der pH-Wert wird mit einer 25 %igen Ammoniaklösung auf pH 9,0 gestellt. Der Feststoff der Dispersion beträgt ca. 47 % und die MFT ist > 44 °C.

Zur Herstellung der Monomeremulsion I werden
- 326,83 Teile: Wasser,
- 20,65 Teile: C₁₁-Alkylethersulfat Na-Salz mit ca. 7 Ethylenoxideinheiten 34%ig,
- 11,20 Teile: Butylmethacrylat,
- 573,80 Teile: Methylmethacrylat,
- 20,80 Teile: Methacrylsäure,
- 6,70 Teile: Methacrylamid
mit einem Schnellrührer so lange gerührt, bis eine stabile Emulsion entsteht.

Zur Herstellung der Monomeremulsion II werden,
- 92,18 Teile: Wasser,
- 5,82 Teile: C₁₁-Alkylethersulfat Na-Salz mit ca. 7 Ethylenoxideinheiten 34%ig,
- 101,30 Teile: Butylmethacrylat,
- 63,70 Teile: Methylmethacrylat,
- 6,93 Teile: Methacrylsäure,
- 2,24 Teile: Methacrylamid
mit einem Schnellrührer so lange gerührt, bis eine stabile Emulsion entsteht.

### Beispiel 5

Herstellung eines Holzlacks
- 745 Teile: Polymerdispersion laut Beispiel 1, 2, 3, 4 bzw. Vergleichsbeispiel 1,
- 172 Teile: Wasser,
- 2 Teile: Entschäumer auf Mineralölbasis,
- 10 Teile: 1,2-Propandiol,
- 10 Teile: Texanol,
- 2 Teile: Aminomethylpropanol,
- 4 Teile: Polyurethanverdicker,
- 25 Teile: Methoxybutanol,
- 30 Teile: 30 %ige Polyethylenwachsemulsion (Erweichungspunkt 100 °C)
werden bei Raumtemperatur unter Rühren zu einem Lack gemischt. In Tabelle 1 sind die Eigenschaften der Lackfilme zusammengestellt.

**Tabelle 1:**

| **Ausprüfung der Dispersionen im Klarlack** | | | | | |
|---|---|---|---|---|---|
| **Dispersion** | **Ausprüfung im Klarlack** | | | | |
| | Blockfestigkeit ¹⁾ | Kratzfestigkeit ²⁾ | Pendelhärte nach König ³⁾ (s) | Reißdehnung in % ⁴⁾ | Beurteilung nach Klimatronbewitterung ⁵⁾ |
| Beispiel 1 | 1 | gut | 35 | 214 | rißfrei (0) |
| Beispiel 2 | 1 | gut | 35 | 135 | rißfrei (0) |
| Beispiel 3 | 1 | gut | 36 | 130 | rißfrei (0) |
| Beispiel 4 | 2 | gut | 43 | 59 | rißfrei (0) |
| Vergleichsbeispiel | nicht verfilmt, da MFT zu hoch | | | | |

| | | | | | |
|---|---|---|---|---|---|
| 1) Zur Prüfung der Blockfestigkeit werden Deckkraftkarten der Firma BYK Malinckrodt oder Fa. Morest mit 50 µm Naßschichtdicke beschichtet. Nach 24 stündigem Trocknen bei Raumtemperatur werden zwei beschichtete Karten mit ihrer beschichteten Seite aufeinander gelegt und 2 h bei Raumtemperatur mit 3,1·10⁴ N/m² (0,32 kp/cm²) belastet. Anschließend wird die Kraft bestimmt, um die Karten wieder voneinander zutrennen. Beurteilung: Note 0: 0 N/m², Note 1: 0,1 - 0,8·10⁴ N/m², Note 2: 0,81 - 1,6·10⁴ N/m², Note 3: 1,61 - 2,4·10⁴ N/m², Note 4: 2,41 - 3,2·10⁴ N/m², Note 5: >3,2·10⁴ N/m². | | | | | |
| 2) Lack 300 µm auf Holz bei Raumtemperatur appliziert, nach 7 Tagen beurteilt. | | | | | |
| 3) Lack 100 µm auf Glas appliziert, nach 7 Tagen gemessen. | | | | | |
| 4) Lack 300 µm auf PE-Folie bei Raumtemperatur appliziert, nach 7 Tagen gemessen. | | | | | |
| 5) Lack zweischichtig (2 Anstriche) auf Fichtenholzbrettchen appliziert. Nach mindestens 7 Tagen Trocknung Beginn der Klimatron-Kurzbewitterung. Nach 400 Zyklen Beurteilung der Rißbildung/Blasenbildung: 0 = keine Risse/Blasen, 6 = starke Risse/Blasen | | | | | |

### Beispiel 6

**Tabelle 2:**

| **Herstellung eines Dispersionslacks** | | | |
|---|---|---|---|
| Pos. | Bestandteile | Lieferant | Gewichtsteil |
| Pigmentpaste | | | |
| 1 | Wasser | | 11,0 |
| 2 | Polyacrylat-Dispergiermittel (®Lopon) | BK Ladenburg | 8,0 |
| 3 | Aminomethylpropanol (Netzmittel ®AMP 90) | Angus Chemie | 2,0 |
| 4 | Entschäumer (®Agitan 295) | Münzing Chemie | 2,0 |
| 5 | Konservierungsmittel (®Mergal K 10) | Riedel de Haën | 2,0 |
| 6 | Propylenglykol | | 40,0 |
| 7 | Titandioxid (®Kronos 2300) | Kronos Titan | 210,0 |

| Bindemittel und Zusätze | | | |
|---|---|---|---|
| 8 | Polymerdispersion It. Beispielen 1-4 bzw. Vergleichsbeispiel | | 560,0 |
| 9 | Ammoniak konz. (25%ig) | | 3,0 |
| 10 | Propylenglykol | | 25,0 |
| 11 | Methoxybutanol | | 15,0 |
| 12 | Filmbildhilfsmittel (Texanol) | Eastman | 5,0 |
| 13 | Wachsemulsion 30%ig, (®Südranol 240) | Süddeutsche Emulsions-Chemie | 20,0 |
| 14 | assoziativer Polyacrylatverdicker (®Mowilith VDM 7000, ca. 30 %) | Hoechst | 20,0 |
| 15 | Wasser | | 77,0 |
| | | | 1000,0 |

### Kennwerte

| | |
|---|---|
| Festkörpergehalt | ca. 50 |
| Pigmentierungsverhältnisse | |
| Dispersion: Pigment/Füllstoff-Gemisch | ca. 1 : 0,38 |
| Bindemittel fest: Pigment/Füllstoff-Gemisch | ca. 1 : 0,75 |
| Pigmentvolumenkonzentration (PVK) | ca. 17 % |
| Spezifisches Gewicht bei 20 °C | ca. 1,2 kg/l |

### Herstellung

Die Einsatzstoffe gemäß Pos. 1-7 (Tabelle 2) werden nacheinander eingewogen und jeweils gut gemischt. Danach wird diese sogenannte Pigmentpaste ca. 20 Minuten im Dissolver (beispielsweise der Fa. IKA; Janke und Kunkel) bei ca. 6000 U/min und einer entsprechenden Dispergiergefäß-/Dissolver-scheibengeometrie dispergiert. Nach Abkühlung der Paste werden die Stoffe gemäß Pos. 8 und 9 vorher gemischt und zugegeben. Die Stoffe gemäß Pos. 10-15 werden dann jeweils unter gutem Rühren, teilweise unter Vormischung (wie im Rezept angegeben) zugeben. Es wird solange gerührt, bis eine homogene Mischung entstanden ist.

Danach wird der pH-Wert kontrolliert und gegebenenfalls mit Ammoniak (25 %ig) auf einen Wert von ca. 8,5 eingestellt.

In Tabelle 3 sind die Eigenschaften der Dispersionslackfilme zusammengestellt.

**Tabelle 3:**

| **Ausprüfung der Dispersionen in der Dispersionslackrezeptur** | | | | | |
|---|---|---|---|---|---|
| **Dispersion** | **Ausprüfung in Dispersionslackrezeptur** | | | | |
| | **Blockfestigkeit**^{**1)**} | **Kratzfestigkeit**^{**2)**} | **Glanz bei 20°/60°**^{**3)**} | **Reißdehnung in %**^{**4)**} | **Beurteilung nach Klimatronbewitterung** ^{**5)**} |
| Beispiel 1 | | gut | 56/77 | 41 | keine Risse; gut; 0 |
| Beispiel 2 | | gut | 55/79 | 42 | keine Risse; gut; 0 |
| Beispiel 3 | | gut | 59/80 | 47 | keine Risse; gut; 0 |
| Beispiel 4 | | gut | 60/81 | 61 | keine Risse; gut; 0 |
| Vergleichsbeispiel | nicht verfilmt | | | | |

| | | | | | |
|---|---|---|---|---|---|
| 1) Zur Prüfung der Blockfestigkeit werden Deckkraftkarten der Firma BYK Malinckrodt oder Fa. Morest mit 50 µm Naßschichtdicke beschichtet. Nach 24 stündigem Trocknen werden zwei beschichtete Karten mit ihrer beschichteten Seite aufeinander gelegt und 2 h bei Raumtemperatur mit 3,1·10⁴ N/m² (0,32 kp/cm²) belastet. Anschließend wird die Kraft bestimmt, um die Karten wieder voneinander zutrennen. Beurteilung: Note 0: 0 N/m², Note 1: 0,1 - 0,8·10⁴ N/m², Note 2: 0,81 - 1,6·10⁴ N/m², Note 3: 1,61 - 2,4·10⁴ N/m², Note 4: 2,41 - 3,2·10⁴ N/m², Note 5: >3,2·10⁴ N/m². | | | | | |
| 2) Lack 300 µm auf Holz appliziert, nach 7 Tagen beurteilt. | | | | | |
| 3) Lack 300 µm auf Glas bei Raumtemperatur appliziert und Glanz nach 7 Tagen gemessen. | | | | | |
| 4) Lack 300 µm auf PE-Folie appliziert und nach 7 Tagen gemessen. | | | | | |
| 5) 2 Anstriche auf Fichtenholzbrettchen. Nach mind. 7 Tagen Trocknung Beginn der Kurzbewitterung im Klimatron. Beurteilung der Rißbildung/Blasenbildung nach 400 Zyklen. Beurteilung: 0 = keine Veränderung; 6 = starke Risse/Blasen | | | | | |

## Patentansprüche

1. Polymerdispersion mit einer Mindestfilmbildetemperatur (MFT) im Bereich von 0 bis 40 °C, erhältlich durch stufenweise Emulsionspolymerisation, indem auf eine erste Stufe mit der Mononomerzusammensetzung I aus
| | |
|---|---|
| 50 bis 68,5 Gew.-% | weichen Monomeren A, deren Homopolymerisate eine Glasübergangstemperatur (T_{g}) unter 0 °C besitzen, |
| 30 bis 50 Gew.-% | harten Monomeren B, deren Homopolymerisate eine Glasübergangstemperatur (T_{g}) über 65 °C besitzen, |
| 0,5 bis 5 Gew.-% | mit A und B copolymerisierbaren α,β-ungesättigten Carbonsäuren und/oder Carbonsäureamiden C, |
| 1 bis 7,5 Gew.-% | Ketogruppen enthaltenden ethylenisch ungesättigten Monomeren D, |
| 0 bis 10 Gew.-% | sonstigen ethylenisch ungesättigten Monomeren E, die kein Stickstoffatom enthalten, |
jeweils bezogen auf die Gesamtmenge des Polymerisats der ersten Stufe, eine zweite Stufe mit der Monomerzusammensetzung II aus
| | |
|---|---|
| 5 bis 45 Gew.-% | weichen Monomeren A, deren Homopolymerisate eine Glasübergangstemperatur (T_{g}) unter 0 °C besitzen, |
| 65 bis 95 Gew.-% | harten Monomeren B, deren Homopolymerisate eine Glasübergangstemperatur (T_{g}) über 65 °C besitzen, |
| 0 bis 4 Gew.-% | mit A und B copolymerisierbaren α,β-ungesättigten Carbonsäuren und/oder Carbonsäureamiden C, |
| 0 bis 5 Gew.-% | Ketogruppen enthaltenden ethylenisch ungesättigten Monomeren D, |
| 0 bis 10 Gew.-% | sonstigen ethylenisch ungesättigten Monomeren E, die kein Stickstoffatom enthalten, |
jeweils bezogen auf die Gesamtmenge des Polymerisats der zweiten Stufe, in einem Gewichtsverhältnis der Monomerzusammensetzung I zur Monomerzusammensetzung II von 50:50 bis 75:25 polymerisiert wird.

2. Polymerdispersion nach Anspruch 1, **dadurch gekennzeichnet, daß** die Monomerzusammensetzung I mindestens 50 Gew.-% Styrol, bezogen auf die Gesamtmenge der Monomeren B, enthält.

3. Polymerdispersion nach Anspruch 1, **dadurch gekennzeichnet, daß** das Monomere D Diaceton(meth)acrylamid ist.

4. Polymerdispersion nach Anspruch 1, **dadurch gekennzeichnet, daß** die Monomerzusammensetzung I für die erste Stufe einen größeren Anteil an Monomeren C und D als die Monomerzusammensetzung II für die zweite Stufe enthält.

5. Polymerdispersion nach Anspruch 1, **dadurch gekennzeichnet, daß** die Polymerdisperison zusätzlich polyfunktionelle Carbonsäurehydrazide in einem Verhältnis von Hydrazidgruppen zu im Polymerisat über Monomere D eingebauten Ketogruppen von 0,5 : 1 bis 1 : 0,5 enthält.

6. Verfahren zur Herstellung der Polymerdispersion gemäß Anspruch 1 durch stufenweise Emulsionspolymerisation, indem die Monomerzusammensetzung I der ersten Stufe und die Monomerzusammensetzung II der zweiten Stufe nacheinander in wäßriger Phase in Gegenwart von Emulgatoren, Initiatoren und gegebenenfalls Schutzkolloiden bei Temperaturen von 60 bis 95 °C emulgiert und polymerisiert werden.

7. Verfahren nach Anspruch 5, **dadurch gekennzeichnet, daß** eine kleine Menge der Monomerzusammensetzung I vorpolymerisiert wird und anschließend nacheinander die verbleibende Menge der Monomerzusammensetzung I und die Monomerzusammensetzung II zudosiert werden.

8. Verwendung der Polymerdispersion nach Anspruch 1 als Bindemittel für die Beschichtung von Untergründen.

9. Verwendung der Polymerdispersion nach Anspruch 1 als Bindemittel in Lasuren.

10. Verwendung der Polymerdispersion nach Anspruch 1 als Bindemittel in Glanzfarben.

## Claims

1. A polymer dispersion having a minimum film-forming temperature (MET) in the range from 0 to 40°C, which is obtainable by stepwise emulsion polymerization, which comprises polymerizing, onto a first stage having the monomer composition I comprising
| | |
|---|---|
| from 50 to 68.5% by weight | of soft monomers A whose homopolymers have a glass transition temperature (T_{g}) below 0°C, |
| from 30 to 50% by weight | of hard monomers B whose homopolymers have a glass transition temperature (T_{g}) above 65°C, |
| from 0.5 to 5% by weight | of α,β-unsaturated carboxylic acids and/or carboxamides C which are copolymerizable with A and B, |
| from 1 to 7.5% by weight | of ethylenically unsaturated monomers D containing keto groups, and |
| from 0 to 10% by weight | of other ethylenically unsaturated monomers E which do not contain a nitrogen atom, |
based in each case on the overall amount of the polymer of the first stage, a second stage having the monomer composition II comprising
| | |
|---|---|
| from 5 to 45% by weight | of soft monomers A whose homopolymers have a glass transition temperature (T_{g}) below 0°C, |
| from 65 to 95% by weight | of hard monomers B whose homopolymers have a glass transition temperature (T_{g}) above 65°C, |
| from 0 to 4% by weight | of α,β-unsaturated carboxylic acids and/or carboxamides C which are copolymerizable with A and B, |
| from 0 to 5% by weight | of ethylenically unsaturated monomers D containing keto groups, and |
| from 0 to 10% by weight | of other ethylenically unsaturated monomers E which do not contain a nitrogen atom, |
based in each case on the overall amount of the polymer of the second stage, in a weight ratio of the monomer composition I to the monomer composition II of from 50:50 to 75:25.

2. A polymer dispersion as claimed in claim 1, wherein the monomer composition I comprises at least 50% by weight of styrene, based on the overall amount of the monomers B.

3. A polymer dispersion as claimed in claim 1, wherein the monomer D is diacetone(meth)acrylamide.

4. A polymer dispersion as claimed in claim 1, wherein the monomer composition I for the first stage contains a larger proportion of monomers C and D than the monomer composition II for the second stage.

5. A polymer dispersion as claimed in claim 1, which additionally comprises polyfunctional carboxylic hydrazides in a ratio of hydrazide groups to keto groups incorporated in the polymer via monomers D of from 0.5:1 to 1:0.5.

6. A process for preparing a polymer dispersion as claimed in claim 1 by stepwise emulsion polymerization, wherein the monomer composition I of the first stage and the monomer composition II of the second stage are emulsified and polymerized in succession in aqueous phase in the presence of emulsifiers, initiators and, if desired, protective colloids at temperatures of from 60 to 95°C.

7. The process as claimed in claim 5, wherein a small amount of the monomer composition I is prepolymerized and then, in succession, the remaining amount of the monomer composition I and the monomer composition II are metered in.

8. The use of a polymer dispersion as claimed in claim 1 as a binder for the coating of substrates.

9. The use of a polymer dispersion as claimed in claim 1 as a binder in stains.

10. The use of a polymer dispersion as claimed in claim 1 as a binder in gloss paints.

## Revendications

1. Dispersion de polymères ayant une température minimale de formation de film (MFT) dans le domaine de 0 à 40°C, que l'on peut obtenir par polymérisation en émulsion par étape, en polymérisant dans une première étape avec la composition de monomères I constituée par
| | |
|---|---|
| 50 à 68,5 % en poids | de monomères souples A, dont les homopolymères possèdent une température de transition vitreuse (T_{g}) inférieure à 0°C, |
| 30 à 50 % en poids | de monomères rigides B, dont les homopolymères possèdent une température de transition vitreuse (T_{g}) supérieure à 65°C, |
| 0,5 à 5 % en poids | d'acides carboxyliques insaturés en α,β et/ou d'amides d'acides carboxyliques C copolymérisables avec A et B, |
| 1 à 7,5 % en poids | de monomères à insaturation éthylénique D contenant des groupes cétoniques, |
| 0 à 10 % en poids | d'autres monomères à insaturation éthylénique E, qui ne contiennent pas d'azote, |
chacun par rapport à la quantité totale du polymère de la première étape, dans une seconde étape avec la composition de monomères II de
| | |
|---|---|
| 5 à 45 % en poids | de monomères souples A, dont les homopolymères possèdent une température de transition vitreuse (T_{g}) inférieure à 0°C, |
| 65 à 95 % en poids | de monomères rigides B, dont les homopolymères possèdent une température de transition vitreuse (T_{g}) supérieure à 65°C, |
| 0 à 4 % en poids | d'acides carboxyliques insaturés en α,β et/ou d'amides d'acides carboxyliques C copolymérisables par A et B, |
| 0 à 5 % en poids | de monomères à insaturation éthylénique D contenant des groupes cétoniques, |
| 0 à 10 % en poids | d'autres monomères à insaturation éthylénique E, qui ne contiennent pas d'azote, |
chacun par rapport à la quantité totale du polymère de la seconde étape, dans un rapport pondéral de la composition de monomères I à la composition de monomères II de 50:50 à 75:25.

2. Dispersion de polymères selon la revendication 1, **caractérisée en ce que** la composition de monomères I présente une teneur en styrène d'au moins 50 % en poids, par rapport à la quantité totale des monomères B.

3. Dispersion de polymères selon la revendication 1, **caractérisée en ce que** le monomère D est le diacétone(méth)acrylamide.

4. Dispersion de polymères selon la revendication 1, **caractérisée en ce que** la composition de monomères I présente un taux de monomères C et D plus élevé dans la première étape, que la composition de monomères II dans la seconde étape.

5. Dispersion de polymères selon la revendication 1, **caractérisée en ce que** la dispersion de polymères contient de plus des hydrazides d'acides carboxyliques polyfonctionnels dans un rapport 0,5:1 à 1:0,5 de groupes hydrazides aux groupes cétoniques incorporés au polymère par l'intermédiaire des monomères D.

6. Procédé pour la préparation de la dispersion de polymères selon la revendication 1 par polymérisation en émulsion en étapes dans lequel on émulsionne et on polymérise la composition de monomères I de la première étape de polymérisation et la composition de monomères II de la seconde étape de polymérisation, successivement, en phase aqueuse en présence d'émulsifiants, d'amorceurs et éventuellement de colloïdes protecteurs, à une température de 60 à 95°C.

7. Procédé selon la revendication 5, **caractérisé en ce qu'**on prépolymérise une petite quantité de la composition de monomères I et ensuite on ajoute successivement la quantité restante de la composition de monomères I et la composition de monomères II.

8. Utilisation de la dispersion de polymères selon la revendication 1 comme liant pour le revêtement de subjectiles.

9. Utilisation de la dispersion de polymères selon la revendication 1 comme liant dans des glacis.

10. Utilisation de la dispersion de polymères selon la revendication 1 comme liant dans des peintures brillantes.
